# EUROPÄISCHE PATENTSCHRIFT

(11) **EP 0 639 593 B1**
(45) Veröffentlichungstag und Bekanntmachung des Hinweises auf die Patenterteilung: **17.10.2001**
(21) Anmeldenummer: 94106816.5
(22) Anmeldetag: 02.05.1994
(51) Int. Cl.: C08F 283/10, C08L 63/00, C08L 71/02, C08G 59/04, C08G 59/06, C08J 3/03

(54) **Verfahren zur Herstellung wässriger, modifizierter Epoxidharz-Dispersionen**
Process for preparing aqueous modified epoxy resin dispersions
Procédé pour préparer des dispersions aqueuses d'époxy modifié

(30) Priorität: 16.08.1993 DE 4327493
(43) Veröffentlichungstag der Anmeldung: 22.02.1995
(73) Patentinhaber: Solutia Germany GmbH & Co. KG, 55252 Mainz-Kastel (DE)
(72) Erfinder: Pfeil, Armin, Dr., D-86916 Kaufering (DE); Hönel, Michael, Dr., D-65189 Wiesbaden (DE); Oberressl, Paul, D-65185 Wiesbaden (DE); Dreischhoff, Dieter, D-65203 Wiesbaden (DE); Petri, Stefan, D-65232 Taunusstein (DE)

(56) Entgegenhaltungen:
- EP-A- 0 330 155
- EP-A- 0 577 958
- GB-A- 899 413
- US-A- 4 522 962
- US-A- 4 539 378

## Beschreibung

Beschichtungsmittel für die Innenbeschichtung von Behältern, die der Aufbewahrung von Nahrungsmitteln und Getränken dienen sollen, haben vor allem zwei Aufgaben: Sie sollen zum einen das Behältermaterial selbst vor aggressiven Bestandteilen des Füllgutes, z.B. Säuren natürlichen Ursprungs, schützen, um eine möglichst lange Lebensdauer des Behälters zu gewährleisten, andererseits sollen sie eine Kontamination des Füllgutes durch das Behältermaterial, z.B. infolge von chemischen Reaktionen, verhindern. Entsprechende Beschichtungen stellen also im Idealfall eine chemisch inerte, undurchlässige Barriere zwischen Füllgut und Behälter dar. Um die genannten Aufgaben zuverlässig zu erfüllen, müssen die Beschichtungen eine Reihe von Forderungen erfüllen. Sie müssen z.B. eine gute Haftung auf Stahl, Weißblech, Aluminium und anderen gängigen Behältermaterialien aufweisen, gegenüber verdünnten Säuren (z.B. Essigsäure, Milchsäure, Kohlensäure) und Schwefel auch bei höheren Temperaturen beständig sein, pasteurisations- und sterilisationsfest sein und auch ein hohes Maß an Elastizität aufweisen, um Verformungen des Behältermaterials, sei es bei der Herstellung der Behälter oder z.B. durch Eindrücken des befüllten Behälters, ohne Beschädigungen zu überstehen. Außerdem dürfen die Beschichtungsmittel keine Bestandteile enthalten, die in das Füllgut wandern und dieses in irgendeiner Hinsicht verändern. Demgemäß unterliegen entsprechende Beschichtungsmittel einer restriktiven gesetzlichen Reglementierung, z.B. in der Bundesrepublik Deutschland durch Regelungen des Bundesgesundheitsamtes (BGA) oder in den USA durch die 21 CFR § 175.300-Regelung. Um einen im Idealfall inerten Beschichtungsfilm zu erhalten, werden im allgemeinen als Beschichtungsmittel Einkomponentensysteme verwendet, deren reaktive Gruppen bei höheren Temperaturen innerhalb kürzester Zeit, z.B. bei 200 °C in acht bis zehn Minuten, vollständig unter Ausbildung eines hochgradig vernetzten Filmes reagieren.

Als geeignete Bindemittel haben sich dabei in der Vergangenheit höhermolekulare Epoxidharze erwiesen. Sie härten in Kombination mit geeigneten Härtern, z.B. Phenolharzen, Aminharzen, Melamin- und/oder Guanaminharzen, Dicyandiamid, Polycarbonsäuren oder deren Anhydriden unter den genannten Bedingungen aus, ergeben chemikalienbeständige, flexible Filme und sind im übrigen durch die erwähnten Gesetze für die Verwendung in Innenbeschichtungen in Nahrungsmittelbehältern zugelassen. Solche Beschichtungsmittelkombinationen enthalten aber im allgemeinen einen größeren Anteil organischer Lösungsmittel. Im Zuge der immer strenger werdenden gesetzlichen Anforderungen hinsichtlich einer Reduktion bzw. gänzlichen Vermeidung von Lösemittelemissionen - hingewiesen sei hier exemplarisch auf die VOC-Regelungen der USA - wächst der Bedarf an lösemittelarmen oder -freien, wäßrigen Beschichtungsmitteln für die Doseninnenbeschichtung. Tatsächlich gibt es bereits eine Reihe von Vorschlägen in dieser Richtung zur Formulierung von wäßrigen Bindemitteln auf Epoxidharzbasis für die Innenbeschichtung von Nahrungsmittelbehältern.

Eine der vielen Möglichkeiten zur Herstellung von wäßrigen Bindemitteln für die Doseninnenbeschichtung eröffnet die Modifizierung von Epoxidharzen mit Acrylaten, die entweder über die Umsetzung von Epoxidgruppen mit (Meth)Acrylsäure(derivaten), also terminal, oder durch laterale Pfropfung auf das Epoxidharzgerüst erfolgen kann. In fast allen Fällen werden ungesättigte Säuremonomere wie z.B. Acrylsäure, mitverwendet, die anschließend neutralisiert werden, um die Löslichkeit oder Dispergierbarkeit in Wasser zu vermitteln. Solche Systeme enthalten im allgemeinen noch bis zu 25 % organische Lösemittel sowie flüchtige Amine und zeigen eine schlechte Wasserbeständigkeit.

Unter "Acryl-Systemen" seien hier die Systeme verstanden, die durch (Co-)Polymerisation von α,β-ungesättigten Monomeren ("Acryl-Monomere") wie z.B. Acryl-, Methacryl- und Vinylverbindungen, aber auch Malein-, Itacon- und Fumarsäurederivaten, erhalten werden.

Es hat sich gezeigt, daß Kombinationen von solchen Acrylsystemen mit Epoxidharzen hervorragende Eigenschaften aufweisen können, die durch die vorteilhaften Eigenschaften der einzelnen Systeme bedingt sind. So bringt das Epoxidsystem gute Haftung, Flexibilität, Chemikalienbeständigkeit und Zähigkeit mit ein, das Acrylsystem je nach Auswahl der Monomeren gezielt einstellbare Glasübergangstemperaturen und Härte sowie mechanische Beständigkeit.

Heißhärtende Epoxy-Acryl-Systeme für den Bereich der Doseninnenlackierung sind schon zahlreich beschrieben worden, hauptsächlich solche Systeme, bei denen eine gezielte Pfropfung des Epoxidharzes mit dem Acrylharz bzw. eine Veresterung herbeigeführt wurde und die Dispergierung durch Neutralisation der Carboxylgruppen mit flüchtigen Basen erfolgt.

In US-A-4,302,373 wird ein Bindemittel beschrieben, welches aus modifizierten Epoxidharzen, sauren Acrylsystemen und tertiären Aminen erhalten wird, einen niedrigen Festkörpergehalt aufweist und viel organisches Lösemittel enthält, nicht sterilisationsfest und daher nur für Getränkedosen geeignet ist.

US-A-4,285,847 beschreibt ein System, welches durch in-Masse-Pfropfung eines Epoxidharzes mit einem Monomerengemisch erhalten wird, wobei das Acrylsystem Carboxylgruppen aufweist. Das Produktgemisch aus ungepfropftem Epoxidharz, Epoxid-Acryl-System und Acrylpolymerem wird durch Neutralisation mit flüchtigen Basen in einem Wasser-Lösemittelgemisch dispergiert, anschließend erfolgt Emulsionspolymerisation mit weiteren Acrylmonomeren. Die so erhaltene ionische Dispersion besitzt einen Festkörpergehalt von etwa 20%, welcher sich zu etwa 45 Teilen aus Epoxidharz und 55 Teilen Acrylat (davon 40 Teile Styrol) zusammensetzt. Der Lösemittelgehalt liegt mit 10 bis 20% recht hoch; das Bindemittel eignet sich ebenfalls lediglich zur Innenbeschichtung von Getränkedosen.

Von der Firma Glidden (J.T.K. Woo et al, ACS Symp. Ser. No. 221, 283(1983)) gibt es ein System auf dem Markt, welches ebenfalls ein amin-neutralisiertes Epoxid-Acryl-Pfropfcopolymer darstellt mit hohem Epoxidharzanteil, niedrigem Festkörpergehalt (20%) und viel Lösemittel (20%). Es wird auf dem Getränkedosensektor als pasteurisationsfester Klarlack eingesetzt.

Auch das von EP-A-0 144 872 beschriebene System auf der Basis von aminneutralisierten Epoxid-Acryl-Estern in Kombination mit Epoxidphosphatestern bringt keine wesentliche Verbesserung, vor allem keine Sterilisationsfestigkeit.

Als Weiterentwicklung des Glidden-Systems bezeichnet EP-A-0 164 589 eine amin-neutralisierte Dispersion auf der Basis von Epoxid-Maleinat-Phosphat-Estern, wobei die Acrylmonomeren an die Doppelbindung des Maleinatrestes copolymerisiert werden, also keine Pfropfung an aliphatische Kohlenstoffatome erfolgt. Es werden hiermit pasteurisationsfeste Filme erhalten.

Eine Dispersion von Dreischichtpartikeln beschreibt EP-A-0 508 120. Die Partikel besitzen einen Kern aus Acrylaten mit tiefer Glasübergangstemperatur, eine mittlere Hülle aus Epoxidharz und eine Schale aus Acrylaten mit hoher Glasübergangstemperatur und hoher Säurezahl. Die Copolymerisation erfolgt in Masse, dispergiert wird ebenfalls unter Einsatz flüchtiger Amine, wobei ein Festkörper von 40% und ein Lösemittelgehalt von 20% erzielt wird. Auch dieses System eignet sich lediglich für Getränkedosen.

Ein sterilisationsfestes System wird lediglich in EP-A-0 130 686 beschrieben. Eine selbstvernetzende, sterisch stabilisierte Acrylatdispersion wird durch Emulsionspolymerisation in Wasser/Alkoholgemischen erhalten und in dieser Dispersion ein Epoxidflüssigharz dispergiert. Hier gelangen keine flüchtigen Amine zum Einsatz. Man erhält so eine Dispersion für sterilisationsfeste Bindemittel, die aber hauptsächlich als wash-coat für Dosenaussenbeschichtungen, also nicht für Innenbeschichtungen eingesetzt werden.

Außerdem sind Systeme bekannt, bei denen nicht gezielt eine Pfropfung zwischen dem Epoxidharz und dem Acrylsystem durch in-Masse-Polymerisation herbeigeführt wird. EP-A-0 176 192 beschreibt wäßrige Zweikomponenten-Epoxidsysteme für die Kalthärtung. Entweder werden Epoxidharz und Acrylmonomere gemischt, dispergiert und anschließend eine Emulsionspolymerisation der Acrylmonomeren durchgeführt, oder das Epoxidharz wird allein dispergiert und mit einer fertigen Acrylatdispersion abgemischt. Es kommen hauptsächlich flüssige Epoxidharze zum Einsatz, die Kalthärtung erfolgt mit den üblichen Amin-Systemen. Eine Anwendung für heißhärtende Systeme oder gar den Dosenlacksektor ist nicht genannt.

Schließlich ist in WO 89/01498 ein System genannt, bei dem das Epoxidharz teilweise mit Methacrylsäure verestert wird, nach Abmischung mit einem sauren Acrylpräpolymer die Dispergierung durch Aminneutralisation erfolgt und typischerweise in der Dispersion Styrol durch Emulsionspolymerisation eingebaut wird. Diese ionische Dispersion mit hohem Polystyrolanteil (30-40% Epoxidharz, 22-26% saures Acrylpräpolymer und 35-50% Polystyrol) eignet sich für pasteurisationsfeste Beschichtungen.

Im allgemeinen werden die zuvor beschriebenen Systeme, die den Stand der Technik repräsentieren, nur selten für die Doseninnenbeschichtung angewendet, da der Einsatz flüchtiger Amine sowohl von der Toxikologie als auch vom Geruch her problematisch ist, ionisch stabilisierte Bindemittel im allgemeinen eine ungenügende Lagerstabilität aufweisen und letztere zudem durch Viskositätsanstieg infolge langsamer Umsetzungen der Koreaktanden (Phenolharze, Melaminharze) weiter beschränkt wird.

Bisher ist es nicht gelungen, eine selbstvernetzende, nichtionisch stabilisierte Epoxid-Acryl-Dispersion zu gewinnen, welche bei hohem Festkörpergehalt und niedrigem Lösemittelanteil oder gar ohne Lösemittel zu sterilisationsfesten Filmen führt und welche die eingangs genannten Anforderungen an einen Doseninnenlack erfüllt.

Einen Zugang zu wäßrigen Beschichtungsmitteln stellt der Einsatz nichtionischer Emulgatoren bzw. die Einführung hydrophiler, nichtionischer Gruppen in das Epoxidharz dar. Auf diese Weise (siehe z.B. EP-A-0 272 595) lassen sich lagerstabile, aminfreie und lösemittelarme wäßrige Dispersionen herstellen. Mit diesen Dispersionen und entsprechenden Koreaktanden wie Phenolharzen und/oder Melaminharzen ließen sich bisher allerdings ebenfalls keine Beschichtungsmittel für Dosen herstellen, die in ihren Eigenschaften dem von konventionellen, lösemittelhaltigen Systemen bekannten Qualitätsstandard nahekamen. Z.B. ließen sich keine vergilbungsfreien Weißlacke formulieren.

Überraschenderweise wurde nun gefunden, daß wäßrige, lösemittelarme, nichtionisch stabilisierte Epoxidharz-Dispersionen auf der Basis der Dispersionen, wie sie in EP-A 272 595 und DE-A 43 09 639 beschrieben sind, nach Modifikation mit "Acrylaten" in Kombination mit speziellen polyfunktionellen Carbonsäuren und/oder deren Derivaten Beschichtungsmittelkombinationen ergeben, welche in der Hitze zu qualitativ hochwertigen Beschichtungen, die alle zuvor genannten Kriterien erfüllen, aushärten und demgemäß in hervorragender Weise für die Innenbeschichtung von Nahrungsmittelbehältern wie beispielsweise Konserven- und Getränkedosen geeignet sind.

Gegenstand der Erfindung ist ein Verfahren zur Herstellung von Epoxidharz-Dispersionen, wobei im ersten Schritt ein Epoxidharz (A) aus
- 50 bis 95 Gew.-% einer oder mehrerer Epoxidverbindungen (A-1) mit mindestens zwei Epoxidgruppen pro Molekül und einer Epoxid-Äquivalentmasse von 100 bis 2000 g/mol,
- 5 bis 50 Gew.-% eines aromatischen Polyols (A-2) hergestellt wird,
dem zumindest eine Teilmenge eines zur radikalischen Polymerisation oder Copolymerisation befähigten äthylenisch ungesättigten Monomeren gemäß (C) zugefügt wird,
anschließend ein Dispergiermittel (B) einhomogenisiert wird, das ein Kondensationsprodukt (B-1) eines Polyols mit einer gewichtsmittleren Molmasse M_{w} von 200 bis 20 000 g/mol und einer Epoxidverbindung mit durchschnittlich mindestens zwei Epoxidgruppen pro Molekül und einer Epoxid-Äquivalentmasse von 100 bis 10 000 g/mol enthält,
und schließlich in diese Mischung portionsweise Wasser eindosiert wird, anschließend nach Zusatz eines Initiators und gegebenenfalls des Restes der Monomeren gemäß (C) eine radikalische Polymerisation dieser Monomeren (C) vorgenommen wird.

Vorzugsweise werden als Komponente
(A-1) 55 bis 85 Gew.-% einer oder mehrerer Epoxidverbindung(en) mit mindestens zwei Epoxidgruppen pro Molekül und einer Epoxidäquivalentmasse von 100 bis 2 000 g/mol eingesetzt;
(A-2) als Komponente wird vorzugsweise 15 bis 45 Gew.-% eines aromatischen Polyols verwendet.
   Zusätzlich kann eine Komponente,
(A-3) in einem Anteil von 0 bis 25, vorzugsweise 0 bis 10 Gew.-% modifizierender Verbindungen mit mindestens zwei epoxid-reaktiven Gruppen bei der Synthese des Epoxidharzes (A) verwendet werden.

Zur Herstellung dieses heißhärtenden Bindemittels wird zunächst das Epoxidharz (A) durch Kondensation der Komponenten (A-1), (A-2) und gegebenenfalls (A-3) bei erhöhten Temperaturen in Gegenwart eines Kondensationskatalysators hergestellt, anschließend werden die Monomeren (C) oder zumindest eine Teilmenge davon zugefügt. Dann wird das Dispergiermittel (B) einhomogenisiert und man erzeugt eine wäßrige Dispersion durch portionsweises Zudosieren von Wasser, worauf man mit

Hilfe eines geeigneten Initiatorsystems und gegebenenfalls unter Zugabe der restlichen Monomeren (C) bei geeigneten Temperaturen die Monomeren (C) vollständig polymerisiert. Zum Schluß wird in die erhaltene Dispersion das Härtungsmittel gemäß (D) und gegebenenfalls die üblichen Zuschlagstoffe nach (E) sorgfältig einhomogenisiert, wobei in jeder Phase des Verfahrens gegebenenfalls organische Lösemittel zugegeben werden können. Bei der Ausführungsform der Erfindung als Zweikomponentensystem unterbleibt das Zufügen des Härtungsmittels (D) in diesem Verfahren.

Gegenstand der Erfindung ist ferner die Verwendung der erfindungsgemäßen Bindemittel zur Herstellung von Beschichtungen, insbesondere von Korrosionsschutz-Einbrenngrundierungen, von Füllern und Decklacken vorzugsweise auf metallischen Untergründen, ferner zur Herstellung von Innen- und Außenlacken für Kronkorken und Schraubverschlüsse sowie für coil-coating-Lacke, welche nach der Vernetzung noch starker Verformung unterliegen, insbesondere aber die Verwendung für Innenbeschichtungen von Getränkedosen und Konservendosen.

Das Epoxidharz entsprechend (A) der erfindungsgemäßen Dispersionen besitzt vorzugsweise eine Molmasse pro Epoxidgruppe (Epoxidäquivalentmasse) von 350 bis 4000 g/mol, insbesondere von 400 bis 2000 g/mol. Die mittlere Teilchengröße des dispergierten Harzes ist in der Regel nicht höher als 1,0 *µ*m und beträgt vorzugsweise 0,2 bis 0,8 *µ*m.

Bei den 1,2-Epoxidverbindungen entsprechend (A-1) und (B-1) handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich bei diesen Epoxidverbindungen um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentmassen dieser Epoxidverbindungen liegen vorzugsweise zwischen 100 und 2000, insbesondere zwischen 100 und 350 g/mol.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxy-phenyl)-1,1-äthan, 2,2-Bis-[4-(2-hydroxypropoxy)phenyl]-propan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)äther, Bis-(4-hydroxyphenyl-)sulfon u.a. sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole, 1,2-Propylenglykol, Polypropylenglykole, 1,3-Propylenglykol, 1,4-Butandiol, 1,5-Pentandiol, 1,6-Hexandiol, 1,2,6-Hexantriol, Glycerin, Neopentylglykol, 1,4-Dimethylolcyclohexan, Trimethyloläthan, Trimethylolpropan, sowie äthoxylierte und propoxylierte Bisphenole wie z.B. propoxyliertes Bisphenol A, genannt. Polypropylenglykole (n = 8 - 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A.M.Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als aromatische Polyole entsprechend (A-2) kommen vorzugsweise die aromatischen OH-gruppenhaltigen Verbindungen in Frage, die vorstehend bei den Komponenten (A-1) beschrieben wurden, also mehrwertige, vorzugsweise zweiwertige Phenole, deren Halogenierungsprodukte und/oder Novolake. Besonders bevorzugt ist auch hier Bisphenol A.

Bei den modifizierenden Verbindungen gemäß (A-3) handelt es sich um Verbindungen mit mindestens zwei funktionellen Gruppen, welche zur Reaktion mit den Epoxidgruppen der Komponente (A-1) befähigt sind, und welche sich nicht unter den aromatischen Polyolen gemäß (A-2) einordnen lassen. Ihr Einsatz kann erfolgen, um durch gezielte Modifikation wünschenswerte Eigenschaften des Basisharzes (A) einzustellen. Hierbei kann es sich um Polyamine (z.B. Äthylendiamin, Diäthylentriamin, Triäthylentetramin, Tetraäthylenpentamin usw.), Polyoxyalkylenoxide mit endständigen Aminogruppen (z.B. Jeffamine® und Novamine® ), Polycarbonsäuren (z.B. Maleinsäure, Fumarsäure, Phthalsäure, Bernsteinsäure, dimere und trimere Fettsäuren usw. und deren Anhydride, oder auch die Säuren wie bei den carboxylgruppenhaltigen Härtungsmitteln gemäß (D) beschrieben) sowie aliphatische Polyole (z.B. Äthylenglykol, Propylenglykol, Butylenglykol, Polyäthylenglykol, Polypropylenglykol, Trimethylolpropan und -äthan, Neopentylglykol, Glycerin usw.) handeln. Besonders bevorzugt sind dimere Fettsäuren mit einem Gehalt von 20 bis 50 Kohlenstoffatomen.

Das Dispergiermittel (B) ist ein Kondensationsprodukt (B-1) aus einem Polyol (B-1-a) und einer Epoxidverbindung (B-1-b) mit mindestens zwei Epoxygruppen, gegebenenfalls in Abmischung mit weiteren, vorzugsweise nichtionischen Tensiden (B-2).

Bei den Polyolen (B-1-a) handelt es sich vorzugsweise um Polyätherpolyole (Polyalkylenglykole) mit mittleren Molmassen (Mw; Gelpermeationschromatographie; Polystyrolstandard) von bevorzugt zwischen 600 und 12000, insbesondere 2000 bis 8000 g/mol und OH-Zahlen zweckmäßigerweise von 10 bis 600, bevorzugt 15 bis 120 mg KOH / g. Diese Polyätherpolyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylenglykole genannt, wobei auch Gemische der jeweiligen Polyalkylenglykole eingesetzt werden können. Vorzugsweise werden Polyäthylenglykole verwendet.

Vorzugsweise wird das Dispergiermittel (B-1) durch Kondensation der genannten Polyätherpolyole mit den Polyglycidyläthern gemäß (A-1) in Gegenwart geeigneter Katalysatoren bei 50 bis 200 °C, vorzugsweise bei 90 bis 170 °C, hergestellt, wobei das Äquivalentverhältnis der OH-Gruppen zu den Epoxidgruppen 1:0,5 bis 1:1,5, vorzugsweise 1:0,95 bis 1:1,25 und die Epoxidäquivalentmasse des Kondensationsproduktes mindestens 5000 g/mol, vorzugsweise 100000 g/mol bis 400000 g/mol beträgt.

Als Katalysatoren für die Darstellung des Dispergiermittels (B-1) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat und Kaliumdodecylat sowie die Alkalisalze von Carbonsäuren, wie zum Beispiel Natrium- und Lithiumstearat bzw. -lactat. Ebenfalls geeignet sind starke anorganische und organische Protonsäuren, zum Beispiel Phosphorsäure, Schwefelsäure, Tetrafluorborsäure und Benzolsulfonsäure. Ferner können als Katalysatoren Lewis-Säuren verwendet werden. Als Beispiele seien genannt Zinn(IV)chlorid, Titan(IV)chlorid, Titan(IV)isopropylat, Triäthyloxoniumtetrafluoroborat sowie Bortrifluorid und seine Komplexe, zum Beispiel mit Phosphorsäure, Essigsäure (1:1 und 1:2), Methanol, Diäthyläther, Tetrahydrofuran, Phenol, Äthylenglykolmonoäthyläther, Polyäthylenglykol (MG200), Dimethylsulfoxid, Di-n-Butyläther, Di-n-Hexyläther, Bernsteinsäure und aliphatische, cycloaliphatische, araliphatische Amine sowie StickstoffHeterocyclen.

Bevorzugt werden als Katalysatoren BF₃-Diäthyläther, BF₃-Essigsäure und wäßrige Tetrafluoroborsäure eingesetzt. Die Menge an Katalysator beträgt im allgemeinen 0,1 bis 5, vorzugsweise 0,1 bis 1 %, bezogen auf die Masse des Reaktionsgemischs. Zur besseren Dosierung kann der Katalysator in einem Lösungsmittel wie Diäthyläther, einem Glykol- oder cyclischen Äther, Ketonen und dergleichen verdünnt werden.

Zur Herstellung des Dispergiermittels (B-1) erwärmt man die umzusetzenden Gemische aus Hydroxylgruppen und Epoxidgruppen enthaltenden Verbindungen bis zu der Temperatur, bei der die Kondensation mit ausreichender Geschwindigkeit d.h. in 30 min bis 5 Stunden, abläuft. Die Umsetzung verfolgt man zweckmäßig über die Zunahme des Epoxidäquivalents, das eine Verminderung des Epoxidgruppengehaltes anzeigt. Die Reaktion kann durch Kühlung unter die Reaktionstemperatur abgebrochen werden.

Das so gewonnene Kondensationsprodukt kann als solches (100%ig) als Dispergiermittel (B-1) bzw. (B) zur Herstellung der erfindungsgemäßen Dispersionen verwendet werden. Vorzugsweise wird jedoch aus Gründen der besseren Handhabbarkeit eine Mischung von 20 bis 99, vorzugsweise 40 bis 60 Gew.-% des Kondensationsproduktes und einem wäßrigen Medium, bestehend aus (bezogen auf die gesamte Mischung) bis zu 50, vorzugsweise bis zu 30 Gew.-%, eines organischen Lösungsmittels und bis zu 80, vorzugsweise 15 bis 60 Gew.-%, Wasser hergestellt und diese Mischung als Dispergiermittel (B-1) bzw. (B) verwendet. Als organische Lösungsmittel kommen insbesondere Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton so wie Methylisobutylketon. Bevorzugt werden Butylglykol, Methoxypropanol, Äthoxypropanol, 2-Propanol, Hydroxyäthyl- oder -propylmethacrylat und/oder Benzylalkohol eingesetzt. Besonders bevorzugt ist aber die Verwendung von reinem Wasser als Lösemittel für das Dispergiermittel (B-1) bzw. (B).

Zusätzlich können zum Dispergiermittel (B-1) auch weitere Dispergiermittel (B-2) anionischer, kationischer und vorzugsweise nichtionischer Art verwendet werden. In Frage kommen Alkylbenzolsulfonate, primäre und sekundäre Alkansulfonate, α-Olefinsulfonate, Alkylsulfate und Alkyläthersulfate als anionische sowie quaternäre Ammoniumverbindungen als kationische Tenside, wobei die ionischen Gruppen nicht mit den Epoxidgruppen wechselwirken dürfen. Bevorzugt ist aber die Verwendung nichtionischer Tenside wie äthoxylierte oder äth/propoxylierte Alkohole, Oxoalkohole, Alkylphenole (z.B. ® Arcopal-Typen der Firma Hoechst), Rizinusöle, Ester, Glycerinstearate, Fettsäuren, Fettamine, Fettalkohole, aber auch z.B. Äthylenoxid-Propylenoxid-Blockcopolymere (z.B. ® Pluronic der Firma BASF). Auch die speziell zur Dispergierung von Epoxidharzen beschriebenen Emulgatoren können zum Einsatz kommen, wie z.B. die aus US-A 4,423,201 und US-A 4,446,256 (Produkte aus Polyalkylenglycolen, Diisocyanaten und Bisphenolen), EP-A 0 497 404 (Produkte aus Alkoxypolyalkylenglycolen, Anhydriden und Alkylenoxiden, Epoxyalkoholen oder Diglycidyläthern), WO 91/10695 (Produkte aus Polyglycidyläthern, bifunkt. Verbindungen und Alkoxypolyalkylenglycolen); EP-A 0 109 173 (Produkte aus Polyoxyalkylenpolyaminen und Epoxidharzen) und DE-A 41 36 943 (Produkte aus Polyalkylenglycolen mit Diisocyanaten und Polyepoxiden) bekannten Produkte.

Als Monomere gemäß (C) kommen sämtliche äthylenisch ungesättigten Verbindungen in Frage, welche zur radikalischen Polymerisation in Emulsion befähigt sind und nicht bei Raumtemperatur mit der vorliegenden Epoxidharz-dispersion reagieren. Dazu zählen Acryl-, Methacryl- und höhere Alkacrylsäuren, sowie deren Alkylester (C₁- bis C₁₈-Alkyl(meth)acrylate, z.B. Methylacrylat und-methacrylat, Äthylacrylat und -methacrylat, n- und iso-Propylacrylat und -methacrylat, n-, iso- und tert-Butylacrylat, n- und tert-Butylmethacrylat, 2-Äthylhexylacrylat und -methacrylat, 4-tert-Butylcyclohexylacrylat, Isobornylacrylat und-methacrylat usw.) und Derivate (z.B. Acrylnitril), aber auch Vinylderivate (z.B. Styrol, α-Methylstyrol, Vinyltoluole, Vinylacetat, Vinylchlorid, Vinylidenchlorid, N-Vinylpyrrolidon usw.) und α,β-ungesättigte Carbonsäuren wie Maleinsäure, Fumarsäure, Itaconsäure usw. sowie deren Derivate, aber auch Alkene wie Isopren und Butadien. Die Monomeren können auch funktionelle Gruppen enthalten, welche bei der später anzustrebenden Härtungsreaktion partizipieren, so eignen sich hier z.B. speziell glycidyl- und hydroxylfunktionelle Monomere (z.B. Glycidylmethacrylat, 2-Hydroxybutylacrylat, 4-Hydroxybutylacrylat, 2-Hydroxyäthylacrylat, 2-Hydroxyäthylmethacrylat, 2-Hydroxypropylacrylat, Hydroxypropylmethacrylat usw.), aber auch amidofunktionelle Verbindungen (z.B.

Acrylamid) oder N-Methylol-Monomere (z.B. N-Methylolacrylamid). Schließlich können auch mehrfachfunktionelle Monomere, sei es bezüglich der Polymerisation oder der Härtung, zugegen sein, so z.B. 1,6-Hexandioldiacrylat, Divinylbenzol usw. Bevorzugt kommen Monomermischungen zum Einsatz, welche carboxy-funktionelle und/oder glycidylfunktionelle Polymere ergeben, d.h. Monomere wie (Meth)Acrylsäure, Fumarsäure, Itaconsäure, Maleinsäure, Glycidyl(meth)acrylat usw. werden verwendet in Kombination mit weiteren Monomeren, wobei die Menge der funktionellen Monomeren bis zu 70 Gew.-% der Mischung beträgt, vorzugsweise 10 bis 40 Gew.-%.

Die aufgeführten Monomere können als gesamte Menge auf einmal vor dem Dispergieren zugesetzt werden und dienen so zur Verminderung der Viskosität und erleichtern die Dispergierung, oder sie können bei einem höheren Polymeranteil zum Teil während des Dispergiervorgangs zugegen sein, und der Rest wird kontinuierlich während der Emulsionspolymerisation zudosiert. Auf diese Weise lassen sich gezielt core-shell-Partikel erzeugen. Die Anwesenheit der Monomeren während der Dispergierung hat den Vorteil, daß das Viskositätsmaximum bei der Phaseninversion Wasser-in-Öl zu Öl-in-Wasser nicht durch inerte, in der fertigen Dispersion verbleibende Lösemittel abgesenkt werden muß, wie es in EP 272 595 beschrieben wurde. Somit gelingt die Formulierung völlig lösemittelfreier Dispersionen - eine weitere erhebliche Verbesserung gegenüber dem Stand der Technik. Ein zu hoher Monomerengehalt während des Dispergiervorganges würde aber die Viskosität zu weit senken, die notwendige Scherkraft für die Zerteilungsvorgänge könnte nicht mehr aufgebaut werden. Darum ist gegebenenfalls die Aufteilung der Monomerenmenge in zweckmäßige Teilmengen nötig.

Der Dispersion aus Epoxid/Acrylharz und Dispergiermittel können aber gegebenenfalls auch Lösungsmittel zugesetzt werden. Als organische Lösungsmittel kommen hier ebenfalls die für das Dispergiermittel (B) genannten in Frage, ferner können auch Aromaten wie Toluol oder Xylol verwendet werden. Die Lösungsmittel können einzeln oder im Gemisch eingesetzt werden. Bevorzugte Lösungsmittel sind wiederum Butylglykol, Methoxypropanol, Methoxybutanol, Isopropoxypropanol, Äthoxypropanol, 2-Propanol und/oder Benzylalkohol.

Nach dem erfolgten Dispergiervorgang wird in der Epoxidharzdispersion die Emulsionspolymerisation bei einer Temperatur eingeleitet, die eine zügige, vollständige Reaktion gewährleistet und gleichzeitig die Dispersion nicht gefährdet. Als Initiatoren kommen hierfür solche thermischer Natur oder Redoxsysteme, die sämtlich dem Fachmann gut bekannt sind, in Frage. Thermische Initiatoren sind z.B. Dibenzoylperoxid, Acetylperoxid, Benzoylhydroperoxid, tert-Butylhydroperoxid, Di-tert-Butylperoxid, Lauroylperoxid, Butyrylperoxid, Diisopropylbenzolhydroperoxid, Cumolhydroperoxid, Paramenthanhydroperoxid, Diacetylperoxid, Di-α-Cumylperoxid, Dipropylperoxid, Diisopropylperoxid, Isopropyl-tert-Butylperoxid, Butyl-tert-butylperoxid, Dilauroylperoxid, Difuroylperoxid, Ditriphenylmethylperoxid, Bis(p-Methoxybenzoyl)peroxid, p-Monomethoxybenzoylperoxid, Rubrenperoxid, Ascaridolperoxid, tert-Butylperoxybenzoat, Diäthylperoxyterephthalat, Propylhydroperoxid, Isopropylhydroperoxid, n-Butylhydroperoxid, Cyclohexylhydroperoxid, trans-Decalinhydroperoxid, α-Methylbenzylhydroperoxid, α-Methyl-α-Äthylbenzylhydroperoxid,Tetralinhydroperoxid,Triphenylmethylhydroperoxid, Diphenylmethylhydroperoxid, 2,5-Dimethyl-2,5-bis(2-Äthylhexanoylperoxy)-hexan, 1,1-Bis(tert-Butylperoxy)-cyclohexan und tert-Butylperbenzoat. Redox-Systeme können gewählt werden aus zumindest teilweise wasserlöslichen Oxidantien wie z.B. Wasserstoffperoxid, tert-Butylhydroperoxid, Persulfate, in Kombination mit Reduktionsmitteln wie alpha-Hydroxyketone, Ascorbinsäure, Hydrazin und Sulfite, Bisulfite, Metasulfite oder Hydrosulfite. Bevorzugt sollten Initiatoren eingesetzt werden, welche keine oder wenig ionische Verbindungen generieren, um die Wasserempfindlichkeit der später eingebrannten Filme nicht unnötig zu erhöhen. Ein besonders bevorzugtes System ist tert-Butylhydroperoxid/Ascorbinsäure.

Die Härtungsmittel (D) werden entweder direkt der Dispersion zugesetzt (Ein-Komponenten-System) oder in Form einer geeigneten Zubereitung erst unmittelbar vor Gebrauch zugemischt (Zwei-Komponenten-System).

Als Härtungsmittel (D) für die erfindungsgemäßen Dispersionen sind alle aus der Chemie bekannten Verbindungen geeignet, wie z.B. Amine, Amide, Lewis-Säuren, Phenole, Phenolharze, Aminoplaste, Carbonsäuren und deren Anhydride. Besonders geeignet sind Carboxylgruppen-haltige Härtungsmittel wie wasserlösliche oder wassermischbare Polycarbonsäuren. Beispiele für solche Polycarbonsäuren sind Cyclopentantetracarbonsäure, Cyclobutantetracarbonsäure, 1,2,3,4-Butantetracarbonsäure, Weinsäure, Malonsäure, Äpfelsäure, Zitronensäure, Aconitsäure u.a. Die Menge an diesem Härtungsmittel (D) wird so gewählt, daß das Äquivalentverhältnis Epoxidäquivalent zu Carboxyläquivalent mindestens 1:0,5 beträgt. Der Begriff "Carboxyläquivalent" und "Epoxidäquivalent" schließt dabei, falls vorhanden, auch solche Monomere unter (C) ein, die Carboxylgruppen und/oder Glycidylgruppen enthalten.

Ferner sind geeignet Anhydride oder saure Ester dieser Säuren mit mehrwertigen Alkoholen mit 2 bis 12, vorzugsweise 2 bis 6 C-Atomen, wie beispielsweise Neopentylglykol, Glycerin, Trimethylol-äthan oder -propan, den Alkandiolen und deren Oligomeren, die gegebenenfalls eine oder mehrere Ätherbrücken enthalten, wie Äthylenglykol, Propan- und Butandiole, wobei die Ester stets mindestens zwei freie Carboxylgruppen aufweisen. Es ist auch möglich, saure Ester mit zwei oder mehr Carboxylgruppen von Carbonsäuren, wie beispielsweise Pyromellithsäure, Trimellithsäure, Phthalsäure, Endomethylentetra- oder -hexahydrophthalsäure, Maleinsäure, Fumarsäure bzw. deren Anhydriden, sofern diese existieren, mit mehrwertigen Alkoholen, z.B. den vorstehend genannten, als Polycarbonsäurehärter zu verwenden, sofern diese sauren Ester eine ausreichende Wasserlöslichkeit bzw. Wasserverdünnbarkeit besitzen. Ebenfalls lassen sich geeignete saure hydrophile Polyester beispielsweise der mehrwertigen Säuren mit den genannten mehrwertigen Alkoholen einsetzen. Auch Reaktionsprodukte dieser Säureanhydride oder Säuren mit polyaminofunktionellen Verbindungen, wie z.B. Polyamine wie Diäthylendiamin, Diäthylentriamin, Triäthylentetramin und höhere Homologe, oder mit den verschiedensten Polyoxyalkylendiaminen (Jeffamine® der Firma Texaco), sowie Hydroxycarbonsäuren, bzw. an den Hydroxylgruppen modifizierte Hydroxycarbonsäuren, wie z.B. alkoxylierte Zitronensäure oder Weinsäure etc., sowie sämtliche unter Härtungsbedingungen zur Umesterung befähigten Säuren, wie z.B. die Methylester von Trimellithsäure oder Äpfelsäure lassen sich als Härtungsmittel einsetzen. Geeignet sind ebenfalls saure Salze der genannten Säuren, bevorzugt solche mit flüchtigen Basen, sowie weitere Derivate, welche unter Härtungsbedingungen reaktive Carboxylgruppen freisetzen. Bevorzugt werden als saure Härtungsmittel Polycarbonsäuren eingesetzt.

Die Härtung der Epoxidharzdispersionen mit den sauren Härtungsmitteln erfolgt zweckmäßigerweise bei höheren Temperaturen, z.B. bei 60 bis 300 °C, vorzugsweise bei 80 bis 250 °C, in einer bis 150 Minuten. Zur Erzielung einer vollständigeren Durchhärtung bzw. zur Senkung der für eine ausreichende Durchhärtung erforderlichen Temperaturen können den genannten sauren Härtern noch geringe Mengen von Verbindungen beigegeben werden, die die Härtungsreaktion katalysieren. Geeignete Verbindungen sind beispielsweise starke Protonsäuren wie Phosphorsäure oder paraToluolsulfonsäure bzw. deren Salze, tertiäre Amine wie Triäthylamin, N,N-Dimethylbenzylamin, Stickstoffheterocyclen wie Imidazol, Pyridin und deren Derivate, Trialkyl- und Triarylphosphine sowie entsprechende Phosphoniumverbindungen und Metallsalze bzw. -chelate wie zum Beispiel Zinn(II)octoat oder Aluminiumacetylacetonat.

Zusätzlich zu den vorstehend beschriebenen Härtern können zur Härtung auch Amin- und/oder Phenolharze genommen werden, die in Mengen von 5 bis 50 Gew.-%, vorzugsweise 10 bis 35 Gew.-%, bezogen auf den Gesamtfeststoffgehalt der fertigen Dispersion, eingesetzt werden. Gegebenenfalls wird die Dispersion dabei noch durch zusätzliches Wasser auf einen Gesamtfeststoffgehalt von 10 bis 80 Gew.-% eingestellt. Beispiele für derartige Aminharze sind Aminaldehydharze, d.h. Kondensationsprodukte von Aldehyden mit Melamin (Melaminharze), Harnstoff (Harnstoffharze), Acetoguanamin (Aceto-guanaminharze) oder ähnlichen Verbindungen bzw. entsprechende Präkondensate. Bevorzugte Aldehydkondensationsprodukte des Melamins sind vor allem die Melamin-Methoxy-Alkyläther, wobei die Alkylreste Methyl, n- oder i-Butylgruppen, bevorzugt Methylgruppen sind, wie Hexamethoxymethylmelamin, Äthoxymethoxymethylmelamin, Monomethylolpentamethoxymethylmelamin, Dimethyloltetramethoxymethylenmelamin, Trimethyloltrimethoxymethylenmelamin und der gleichen mit weitgehend monomerer Struktur sowie entsprechende oligomere oder polymere Produkte.

Als Phenolharzhärter seien Resole, Formaldehyd-Phenolcarbonsäureharze und Phenolharzvorprodukte genannt, wobei die handelsüblichen verätherten, mit Wasser verdünnbaren Phenolharzresole bevorzugt sind.

Gegebenenfalls kann man den Phenol- und/oder Aminharz enthaltenden Dispersionen auch saure Katalysatoren, wie para-Toluolsulfonsäure, Cyclohexansulfaminsäure, saures Butylphosphat und Phosphorsäure - gegebenenfalls auch als (Amin)salze - zusetzen, um die Geschwindigkeit der Härtungsreaktion zu beschleunigen, so daß man Filme oder Überzüge erzeugt, die bei niedriger Temperatur oder in kürzerer Zeit aushärten. Die Menge dieser sauren Katalysatoren beträgt z.B. 2 Gew.-%, bezogen auf den Gesamtfeststoffgehalt.

Das Verhältnis von Epoxidharz (A) zu Additionspolymeren (C) liegt von 99,5:0,5 bis 20:80, bevorzugterweise zwischen 5:95 und 50:50 Gew.-%. Dabei enthält das Polymere (C) gegebenfalls carboxylgruppenhaltige und/oder glycidylgruppenhaltige Monomere, bevorzugt von 2,5 bis 25 Gew.-%. Der Anteil des Härtungsmittels (D) wird so gewählt, daß unter Berücksichtigung der gegebenenfalls in (C) enthaltenen reaktiven Gruppen ein Äquivalentverhältnis COOH:Epoxidgruppen von 0,5:1 bis 5:1, bevorzugt von 0,6:1 bis 1,5:1 erreicht wird. Der Gehalt an Dispergiermittel (B) bezieht sich auf sämtliche nicht wasserlöslichen Bestandteile der Dispersion, d.h. auf das Epoxidharz (A), das Polymer (C) und gegebenenfalls den Härter (D), sofern dieser nicht wasserlöslich ist und liegt zwischen 2,5 und 25 Gew.-%, bevorzugt zwischen 5 und 15 Gew.-%. Die Zusammensetzung des Dispergiermittels liegt für (B-1) : (B-2) zwischen 0 : 100 und 100 : 0, bevorzugt über 75 : 25. Der Festkörpergehalt der erfindungsgemäßen Dispersion liegt zwischen 20 und 80 Gew.-%, bevorzugt aber von 45 bis 65 Gew.-%, wobei die Dispersion bis 10 Gew.-% Lösemittel enthalten kann, bevorzugt aber lösemittelfrei ist.

Gegebenenfalls benötigte Additive gemäß (E) sowie - falls für den beabsichtigten Einsatz gewünscht - weitere Härtungsmittel werden in solchen Mengen zugesetzt, wie sie für den entsprechenden Zweck benötigt und dem Fachmann bekannt sind. In diesem Fall bleibt dem Anwender überlassen, welchen Festkörpergehalt und Lösemittelgehalt er wählt.

Die erfindungsgemäßen Dispersionen können neben dem Bindemittel (A) + (B) + (C) + (D) auch noch andere härtbare Bindemittel enthalten. Solche zusätzlichen Bindemittel sind beispielsweise in wäßrigen Medien dispergierbare Harze auf Basis von Hydroxyalkylacrylestern, Hydroxyalkyden, Polyestern, Epoxidharzen und dergleichen. Der Anteil dieser Zusätze kann so bemessen werden, daß deren Anteil am Gesamtfeststoffgehalt etwa 0 bis 80, vorzugsweise 20 bis 40 Gew.-%, beträgt. Durch den Zusatz solcher Harze können die Eigenschaften der aus den Dispersionen hergestellten Produkte in mannigfaltiger Weise beeinflußt werden. So ist es z.B. möglich, durch den Zusatz von Acrylatharzen die Vergilbungsbeständigkeit zu erhöhen, während bei Anwesenheit von Alkydharzen die Elastizität der daraus hergestellten Beschichtungen deutlich verbessert wird.

Die Viskosität dieser Dispersionen beträgt im allgemeinen zwischen 200 und 30000 mPa.s, vorzugsweise zwischen 750 und 7000 mPa.s.

Als übliche Zusatzstoffe im Sinne von (E), die eventuell in den erfindungsgemäßen Dispersionen vorhanden sein können, seien hier beispielsweise die üblichen Lackadditive wie Pigmente, Pigmentpasten, Antioxidantien, Verlaufs- bzw. Verdikkungsmittel, Entschäumer/Entlüfter und/oder Netzmittel, Reaktiwerdünner, Füllstoffe, Katalysatoren, Konservierungsmittel, Schutzkolloide udgl. genannt. Diese Additive, wie auch die Härter, können der Dispersion gegebenenfalls erst unmittelbar vor der Verarbeitung zugegeben werden.

Zur Herstellung der erfindungsgemäßen Epoxidharzdispersionen wird zunächst das Epoxidharz (A) durch Kondensation der Komponenten (A-1) und (A-2), gegebenenfalls mit (A-3), bei erhöhten Temperaturen, im allgemeinen bei 100 bis 220 °C, vorzugsweise bei 150 bis 180 °C, in Gegenwart eines die Kondensation beschleunigenden Katalysators hergestellt.

Werden zwei oder mehrere Epoxidverbindungen (A-1) eingesetzt, so wird die Kondensationsreaktion vorzugsweise in zwei Stufen durchgeführt, wobei in einer ersten Reaktion eine oder mehrere Komponenten (A-1) mit den Komponenten gemäß (A-2) und gegebenenfalls (A-3) in einem solchen Mengenverhältnis umgesetzt werden, daß dieses erste Kondensationsprodukt eine Epoxid-Äquivalentmasse von größer als 5000 g/mol, vorzugsweise größer als 20 000 g/mol, besitzt und noch freie phenolische Gruppen aufweist, und in einer weiteren Kondensationsreaktion dieses erste Kondensationsprodukt mit weiteren Epoxidverbindungen gemäß (A-1) umgesetzt wird, so daß schließlich das gewünschte Epoxidharz (A) erhalten wird.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quartäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z.B. Natriumformiat, Lithiumbenzoat und Lithiumstearat und Lewis-Säuren, wie z.B. Bortrifluorid und seine Komplexe, Titantetrachlorid, Zinnchlorid und Triäthyloxoniumtetrafluoroborat.

Anschließend werden dem Epoxidharz (A) bei Temperaturen von 60 bis 200 °C, vorzugsweise von 70 bis 120 °C, die Monomeren gemäß (C) bzw. eine zweckmäßige Teilmenge, dann das Dispergiermittel (B) und gegebenenfalls organische Lösungsmittel zugegeben und 15 bis 180, vorzugsweise 30 bis 90 Minuten, verrührt. Wahlweise läßt sich nach der Zugabe der Monomeren eine (zumindest teilweise) Reaktion zwischen Epoxidharz und den Monomeren durchführen, wie z.B. Addition von Carboxyl- oder Amin-Monomeren an die Epoxidgruppen oder Pfropfung an aliphatische Kohlenstoffatome des Epoxidharzes, bevor das Dispergiermittel zugegeben wird.

Danach wird bei Temperaturen von 30 bis 100 °C, bevorzugt 50 bis 90 °C, die entsprechende Menge an Wasser, vorzugsweise in mehreren Teilmengen, unter kräftigem Rühren zudosiert, wodurch die wäßrige Dispersion entsteht. Hierbei können gegebenfalls geeignete Entschäumer-/Entlüfter-Additive zugesetzt werden.

Die Dispergierung des Epoxidharzes (A) in Wasser erfolgt zweckmäßigerweise unter Zuhilfenahme geeigneter Dispergierapparate, beispielsweise eines schnelllaufenden Flügelrührers, eines Mehrimpulswendelrührers, einer Kolloidmühle, eines Homogenisators, eines Dissolvers oder eines sonstigen Schnellmischers mit einer hohen Scherkraft.

In der so erhaltenen, monomerenhaltigen Epoxidharz-Dispersion wird nun bei geeigneter Temperatur die Emulsionspolymerisation eingeleitet. Die Temperatur muß ausreichend hoch sein, damit eine zügige Polymerisationsrate erreicht wird, andererseits darf durch eine zu hohe Temperatur die Stabilität der Dispersion nicht gefährdet werden. Bei Redox-Initiatoren wird bevorzugt das Oxidationsmittel zusammen mit dem Verdünnungswasser einhomogenisiert, und das Reduktionsmittel kontinuierlich zudosiert. Bei höherer Monomerenmenge als für die Dispergierung benötigt, wird dabei auch die Restmenge der Monomeren und gegebenenfalls die Restmenge des Dispergiermittels zudosiert, wobei hier gezielt die Darstellung von core-shell-Acrylatpartikeln möglich ist, um die Eigenschaften der Dispersion in gewünschter Weise zu steuern. Der bevorzugte Temperaturbereich für die Emulsionspolymerisation beträgt 20 bis 90 °C, die Reaktionskontrolle erfolgt über Festkörperbestimmung oder Gaschromatographie. Eine unerwünschte Viskositätszunahme kann durch Nachdosieren von Wasser ausgeglichen werden.

Nun erfolgt bei der Ausführungsform der Erfindung als Einkomponentensystem unter kräftigem Rühren die Zugabe des Härtungsmittels (D), wobei ebenfalls durch längeres Verrühren, 15 bis 180, vorzugsweise 30 bis 90 Minuten, eine gute Homogenisierung erreicht wird. Zu dem so erhaltenen heißhärtenden 1 K-Bindemittel können gegebenenfalls unter gutem Homogenisieren die üblichen Additive, Pigmente, Füllstoffe und/oder weitere Härterharze zugefügt werden.

Die Härtungsmittel können als gesamte Menge oder in Teilmengen den Epoxidharzdispersionen direkt nach deren Herstellung oder auch kurz vor der Applikation zugegeben werden. Vorzugsweise erfolgt die Zugabe der Stoffe gemäß (D) direkt nach der Herstellung der Epoxidharzdispersion unter guter Homogenisierung.

Gegenüber den bekannten wäßrigen Beschichtungsmitteln für die Innenbeschichtung von Nahrungsmittelbehältern aller Art zeichnen sich die erfindungsgemäßen durch hervorragende Lagerstabilität, Aminfreiheit und Lösemittelarmut bzw. -freiheit aus. Sie sind ferner als nichtionisch stabilisierte Systeme weitestgehend unempfindlich gegen pH-Wert-Schwankungen und Wasserhärteeinflüsse, haben gegenüber ionisch stabilisierten Bindemitteln trotz niedriger Viskosität einen hohen Festkörpergehalt und weisen eine gute Pigmentierbarkeit auf.

Die erfindungsgemäß erhaltenen Bindemittel bzw. wäßrigen Lacke lassen sich nach den herkömmlichen Methoden (durch Tauchen, Aufwalzen, Spritzen, Streichen etc.) in dünner Schicht auf die verschiedensten, vorzugsweise metallischen Substrate auftragen und zweckmäßigerweise bei Temperaturen von 60 bis 300 °C, vorzugsweise von 80 bis 250 °C, innerhalb von ein bis 150 Minuten einbrennen.

Die mit den erfindungsgemäßen Beschichtungsmitteln erhaltenen Beschichtungen sind hochgradig vernetzt, chemikalienbeständig, sterilisations- und pasteurisationsfest sowie wasserbeständig. Sie zeigen beim Einbrennen geringe oder gar keine Vergilbung, guten Verlauf und Glanz, und weisen hervorragende Haftung auf den verschiedensten Untergründen, auch bei mechanischer Belastung wie z.B. beim Tiefziehen, auf.

Die folgenden Beispiele beschreiben die Herstellung des Epoxidharzes (A), des Dispergiermittels (B), der Dispersion (A) + (B) + (C) bzw. des heißhärtenden Bindemittels (A) + (B) + (C) + (D) sowie dessen Anwendung, wobei sie sich auf die besonders bevorzugten, absolut lösemittelfreien Systeme beschränken.

### BEISPIELE

### I. Epoxidharze (A)

1) In einem 1-I-Vierhalskolben, ausgerüstet mit Thermometer, Flügelrührer, Rückflußkühler und Tropftrichter wurden unter einer Inertgas-Atmosphäre 144 g eines Polypropylenglykol-Diglycidyläthers mit einer Epoxidäquivalentmasse von ca. 340 g/mol und 231 g Bisphenol A unter Rühren auf 130 °C erwärmt. Nach Zugabe von 300 mg Katalysator 1201 der Firma Shell Chemie (quartäres Phosphoniumiodid) wurde weiter auf 160 ° C erwärmt und bei dieser Temperatur gehalten, bis die Epoxidäquivalentmasse des Umsetzungsproduktes mehr als 10 000 g/mol betrug. Anschließend wurde auf 120 °C gekühlt und bei dieser Temperatur 525 g eines Diglycidyläthers von Bisphenol A mit einer Epoxidäquivalentmasse von 183 g/mol zugesetzt. Nach Zugabe von weiteren 300 mg des o.g. Katalysators wurde auf 160 °C erwärmt und bei dieser Temperatur gehalten, bis das Produkt eine Epoxidäquivalentmasse von 729 g/mol aufwies.
2) Es wurde genau wie unter Beispiel I.1) verfahren, jedoch wurden die Rohstoffe zusammen eingesetzt und mit 600 mg des Katalysators einstufig umgesetzt.
3) Wie in Beispiel 1.2) beschrieben, wurden 26 g eines modifizierten Epoxidharzes (Diglycidyläther von propoxyliertem Bisphenol A, DOW experimental resin XU 7189100) mit einer Epoxidäquivalentmasse von 345 g/mol mit 73 g eines Polypropylenglykol-Diglycidyläthers mit einer Epoxidäquivalentmasse von ca. 340 g/mol und 239 g Bisphenol A zu einem Produkt mit einer Epoxidäquivalentmasse von 725 g/mol umgesetzt.
4) Wie in Beispiel 1.2) beschrieben, wurden 26 g Diglycidyläther von Cyclohexandimethanol (® Epodil 757 der Firma Anchor) mit einer Epoxidäquivalentmasse von 160 g/mol mit 72 g eines Polypropylenglykol-Diglycidyläthers mit einer Epoxidäquivalentmasse von ca. 340 g/mol, 235g eines Diglycidyläthers von Bisphenol A mit einer Epoxidäquivalentmasse von 183 g/mol und 117 g Bisphenol A zu einem Produkt mit einer Epoxidäquivalentmasse von 720 g/mol umgesetzt.
5) Wie in Beispiel 1.2) beschrieben, wurden 69,5 g Resorcin mit 72 g eines Polypropylenglykol-Diglycidyläthers mit einer Epoxidäquivalentmasse von ca. 340 g/mol und 308,5 g eines Diglycidyläthers von Bisphenol A mit einer Epoxidäquivalentmasse von 183 g/mol zu einem Produkt mit einer Epoxidäquivalentmasse von 703 g/mol umgesetzt.
6) Wie in Beispiel I.2) beschrieben, wurden 27 g Resorcin und 56 g Bisphenol A mit 102 g eines Polypropylenglykol-Diglycidyläthers mit einer Epoxidäquivalentmasse von ca. 340 g/mol und 240 g eines Diglycidyläthers von Bisphenol A mit einer Epoxidäquivalentmasse von 183 g/mol zu einem Produkt mit einer Epoxidäquivalentmasse von 772 g/mol umgesetzt.
7) Wie in Beispiel 1.2) beschrieben, wurden 93,5 g Bisphenol A mit 58 g eines Polypropylenglykol-Diglycidyläthers mit einer Epoxidäquivalentmasse von ca. 340 g/mol und 212 g eines Diglycidyläthers von Bisphenol A mit einer Epoxidäquivalentmasse von 183 g/mol zu einem Produkt mit einer Epoxidäquivalentmasse von 733 g/mol umgesetzt.
8) Ein Gemisch von 103,4 g Polypropylenglykol-Diglycidyläther mit einer Epoxidäquivalentmasse von ca. 340 g/mol, 223 g Diglycidyläther von Bisphenol A mit einer Epoxidäquivalentmasse von 183 g/mol, 93,5 g Bisphenol A und 30,2 g einer dimeren Fettsäure mit der mittleren Molmasse 567 g/mol (® Pripol 1009 der Firma UNICHEMA) werden auf 150 °C geheizt und nach Zugabe von 0,7 g Shell-Katalysator 1201 solange auf 160 °C gehalten, bis der konstante EV-Wert von 745 g/mol erreicht wird.

### II. Dispergiermittel (B)

1) 309 g technisches Polyäthylenglykol mit einer gewichtsmittleren Molmasse (Mw) von 4000 g/mol und 34,1 g eines Polyglycidyläthers auf Basis von Bisphenol A mit einer Epoxidäquivalentmasse von 183 g/mol wurden zusammen auf 100 ° C erhitzt und unter Rühren mit 0,35 ml 50%iger wäßriger Tetrafluorborsäure versetzt. Das Äquivalentverhältnis von OH-Gruppen zu Epoxidgruppen betrug 1 : 1,20. Die Mischung wurde weiter auf 130 °C erwärmt und bei dieser Temperatur gehalten, bis die Epoxidäquivalentmasse des Kondensationsproduktes ca. 350 000 g/mol betrug. Nach Erkalten wies der Emulgator eine spröde, wachsartige feste Konsistenz auf.
2) 155 g technisches Polyäthylenglykol mit einer mittleren Molmasse (Mw) von 2000 g/mol und 34,1 g eines Polyglycidyläthers auf Basis von Bisphenol A mit einer Epoxidäquivalentmasse von 183 g/mol wurden zusammen auf 100 °C erhitzt und unter Rühren mit 0,35 ml 50%iger wäßriger Tetrafluorborsäure versetzt. Das Äquivalentverhältnis von OH-Gruppen zu Epoxidgruppen betrug 1 : 1,20. Die Mischung wurde weiter auf 130 °C erwärmt und bei dieser Temperatur gehalten, bis die Epoxidäquivalentmasse des Kondensationsproduktes ca. 350 000 g/mol betrug. Nach Erkalten wies der Emulgator eine wachsartige feste Konsistenz auf.
3) 250 g des gemäß Beispiel II.1) hergestellten Kondensationsproduktes wurden unter Rühren und leichtem Erwärmen auf ca. 80 °C in 250 g Wasser gelöst. Die erhaltene hellgelbe, klare Emulgatorlösung wies eine Viskosität (gemessen nach Brookfield, 25 °C) von 3500 mPa.s und einen Festkörpergehalt von 50 % auf.
4) 150 g des gemäß Beispiel II.1) hergestellten Kondensationsproduktes wurden mit 100 g des gemäß Beispiel II.2) hergestellten Kondensationsproduktes unter Rühren und leichtem Erwärmen auf ca. 70 °C in 250 g Wasser gelöst. Die erhaltene leicht gelbliche, klare Emulgatorlösung wies eine Viskosität (gemessen nach Brookfield, 25 °C) von 1800 mPa.s und einen Festkörpergehalt von 50 % auf.

### III. Epoxid-Acrylat-Dispersionen (A) + (B) + (C)

### Abkürzungen für die Monomeren:

| | | | |
|---|---|---|---|
| MMA | Methylmethacrylat | MAS | Methacrylsäure |
| HEMA | 2-Hydroxyäthylmethacrylat | ST | Styrol |
| GlyMA | Glycidylmethacrylat | BuMA | n-Butylmethacrylat |
| 2EHexA | 2-Athylhexylacrylat | | |

### Allgemeine Arbeitsvorschrift:

450 g Epoxidharz werden bei 100 °C mit maximal 45 g Monomeren gemäß (C) homogenisiert und bei 90 °C mit Dispergiermittel aus Beispiel II.3) versetzt. Man rührt bei 80 °C zügig 60 g Wasser ein, gibt 1 Gew.-% (bez. auf Monomere) tert-Butylhydroperoxid zu und homogenisiert eine Stunde, wobei man auf 65 °C hält. Nun werden schrittweise 265 g Wasser zugegeben, wobei die Temperatur zum Schluß bei 60 °C liegt. Man hält bei dieser Temperatur und dosiert während 1,5 Stunden eine Lösung von 1,5 Gew.-% (bez. auf Monomere) Ascorbinsäure in etwa 10 g Wasser zu (gegebenenfalls synchron die restlichen Monomere), wobei eine leichte Exothermie zu beobachten ist. Nachdem der Ansatz noch 1,5 h bei 60 °C nachreagieren konnte, wird mit etwas Wasser auf etwa 2500 mPas eingestellt.

**Tabelle:**

| Beispiel | Epoxidharz (450 g) | Dispergier-mittel (g) | Monomere (g) | nfA (%) | EV fest (g/mol) | TG (nm) | Viskosität (mPas) |
|---|---|---|---|---|---|---|---|
| III.1 | I.2 | 100 II.3 | 45 MMA | 56,2 | 900 | 415 | 2600 |
| III.2 | I.2 | 100 II.3 | 22,5 MMA + 22,5 HEMA | 55,5 | 900 | 544 | 880 |
| III.3 | I.2 | 100 II.3 | 30 MMA + 15 MAS | 53,2 | 900 | 452 | 1200 |
| III.4 | I.2 | 175 II.3 | 45 ST | 58,4 | 1042 | 454 | 2300 |
| III.5 | I.2 | 175 II.3 | 60 MMA + 30 MAS | 60,9 | 1074 | 673 | > 100000 |
| III.6 | I.2 | 175 II.3 | 30 MMA + 15 MAS | 58,0 | 1105 | 440 | 94000 |
| III.7 | I.2 | 175 II.3 | 90 MMA | 60,4 | 1082 | 500 | 7500 |
| III.8 | I.1 | 175 II.3 | 60 MMA + 30 MAS | 55,7 | 1095 | 332 | 6600 |
| III.9 | I.1 | 175 II.3 | 80 MMA + 10 MAS | 54,3 | 1075 | 332 | 9200 |
| III.10 | I.2 | 175 II.3 | 30 MMA + 15 MAS | 50,8 | 1000 | 566 | 3300 |
| III.11 | I.2 | 175 II.3 | 27 MMA + 13,5 MAS + 4,5 BuMA | 52,6 | 956 | 513 | 5500 |
| III.12 | I.2 | 175 II.3 | 27 MMA + 13,5 MAS + 4,5 2EHexMA | 51,2 | 980 | 476 | 2500 |
| III.13 | I.2 | 175 II.3 | 43 MMA + 22 MAS | 51,1 | 1030 | 469 | 2200 |
| III.14 | I.2 | 175 II.3 | 57 MMA + 28 MAS | 53,5 | 1110 | 608 | 1000 |
| III.15 | I.2 | 175 II.3 | 22,5 MMA + 22,5 MAS | 46,3 | 1022 | 453 | 3900 |
| III.16 | I.2 | 175 II.3 | 43 MMA + 22 GlyMA | 55,3 | 884 | 659 | 2600 |
| Abkürzungen: nfA Festkörpergehalt (1g, 1h, 125 °C) EV Epoxidäquivalentmasse TG Teilchengröße, Photonenkorrelationsspektroskopie, monomodal | | | | | | | |

### IV. Herstellung der erfindungsgemäßen Beschichtungsmittel

Allgemeine Arbeitsvorschrift für die Formulierung der erfindungsgemäßen Bindemittel:
Zu einer Epoxy-Acryl-Dispersion gemäß III. gibt man unter gutem Rühren langsam eine Lösung oder Dispersion von mindestens 0,5 mol der Härterkomponente gemäß (D) je mol Epoxid-Gruppen in der benötigten Menge Wasser, wobei die evtl. vorhandenen Carboxylgruppen und/oder Glycidylgruppen des Additionspolymeren berücksichtigt werden. Nach gutem Homogenisieren werden 0,5 Gew.-% Phosphorsäure (als 50%ige wäßrige Lösung) eingerührt. Das so dargestellte heißhärtende 1K-Beschichtungsmittel hat in der Regel einen Festkörpergehalt von etwa 50 bis 60%. Es ist als wäßriger Klarlack in dieser Form direkt einsetzbar und wurde so ohne weitere Zuschläge unter V. nach den Standardverfahren für Doseninnenlacke geprüft.

Gegebenenfalls könnten im Anschluß noch verschiedene Zuschlagstoffe gemäß (E) zur Entschäumung, Benetzung, Verlaufsverbesserung, Pigmentierung etc. einhomogenisiert werden.

### V. Anwendungstechnische Eigenschaften

Es werden mit einer 25 *µ*m-Rakel dünne Filme auf Weißbleche und/oder Aluminiumbleche aufgezogen und diese bei 200 °C 12 Minuten lang eingebrannt. Der eingebrannte Film weist eine Trockenschichtdicke von ca. 5 *µ*m auf.

Sämtliche Klarlacke, welche aus Epoxidharzdispersionen gemäß Beispiel III. und mit verschiedenen Härtungsmitteln (D) nach der allgemeinen Arbeitsvorschrift in IV. erhalten wurden, bilden hochvernetzte und tiefziehfähige Filme mit hohem Glanz und guter Haftung bei sehr gutem Verlauf. Die Sterilisationsbeständigkeit und Schwefelbeständigkeit sind durchwegs gut bis sehr gut.

Somit sind die erfindungsgemäß beschriebenen neuen Bindemittel nicht nur für den Einsatz in Getränkedosen, sondern auch für Lebensmitteldosen uneingeschränkt geeignet.

### VI. Migrationsprüfungen

Für den Einsatz der erfindungsgemäßen Dispersionen wurden mehrere typische Vertreter unter den unter V. genannten Bedingungen auf Sn- oder Ag-Folien aufgebracht und die eingebrannten Filme mit Wasser, 3 % Essigsäure und 15 % Äthanol bei 121 °C 30 min, mit n-Heptan bei 65 °C 2 Std. lang extrahiert (2 dm² Oberfläche in Kontakt mit 400 cm³ Simulanzlösemittel). Durch Verdampfen des Lösemittels und gravimetrische Bestimmung des Rückstandes wurden die Globalmigrationswerte (in mg/dm²) bestimmt, welche deutlich unter den Grenzwerten von FDA (7,8 mg/dm²) und BGA (5,0 mg/dm²) liegen, im Mittel bei etwa 2 - 3 mg/dm². In diesem Bereich liegen auch konventionelle Konservendoseninnenlacke auf Epoxidharz bzw. Epoxy-Phenolharz-Basis. Somit erfüllen die erfindungsgemäßen Dispersionen die Anforderungen an Konservendoseninnenbeschichtungen bezüglich der Globalmigration. Wäßrige Systeme, die dem Stand der Technik entsprechen und auch zum Einsatz kommen, würden den Test unter den o.g. Bedingungen nicht bestehen, d.h. sind nicht sterilisationsfest.

## Patentansprüche

1. Verfahren zur Herstellung von wäßrigen Epoxidharz-Dispersionen, wobei im ersten Schritt ein Epoxidharz (A) aus
- 50 bis 95 Gew.-% einer oder mehrerer Epoxidverbindungen (A-1) mit-mindestens zwei Epoxidgruppen pro Molekül und einer Epoxid-Äquivalentmasse von 100 bis 2000 g/mol,
- 5 bis 50 Gew.-% eines aromatischen Polyols (A-2) hergestellt wird,
dem zumindest eine Teilmenge eines zur radikalischen Polymerisation oder Copolymerisation befähigten äthylenisch ungesättigten Monomeren gemäß (C) zugefügt wird,
anschließend ein Dispergiermittel (B) einhomogenisiert wird, das ein Kondensationsprodukt (B-1) eines Polyols mit einer gewichtsmittleren Molmasse M_{w} von 200 bis 20 000 g/mol und einer Epoxidverbindung mit durchschnittlich mindestens zwei Epoxidgruppen pro Molekül und einer Epoxid-Äquivalentmasse von 100 bis 10 000 g/mol enthält,
und schließlich in diese Mischung portionsweise Wasser eindosiert wird,
anschließend nach Zusatz eines Initiators und gegebenenfalls des Restes der Monomeren gemäß (C) eine radikalische Polymerisation dieser Monomeren (C) vorgenommen wird.

2. Verfahren zur Herstellung von wäßrigen Epoxidharz-Dispersionen nach Anspruch 1, **dadurch gekennzeichnet, daß** bei der Herstellung des Epoxidharzes (A) zusätzlich Verbindungen (A-3) in einem Anteil von bis zu 25 Gew.-% eingesetzt werden ausgewählt aus Polyaminen, Polyalkylenoxiden mit endständigen Aminogruppen, Polycarbonsäuren und aliphatischen Polyolen.

3. Verfahren zur Herstellung von wäßrigen Einkomponenten-Epoxidharz-Dispersionen nach Anspruch 1, **dadurch gekennzeichnet, daß** nach der Polymerisation ein Härter (D) zugefügt wird.

4. Verfahren zur Herstellung von wäßrigen Einkomponenten-Epoxidharz-Dispersionen nach Anspruch 3, **dadurch gekennzeichnet, daß** der Härter (D) ausgewählt ist aus der Gruppe der Amine, Amide, Lewis-Säuren, Phenole, Carbonsäuren, Carbonsäureanhydride und Aminoplaste.

5. Verfahren nach Anspruch 3, **dadurch gekennzeichnet, daß** der Härter (D) eine oder mehrere Carboxylgruppen-haltige Verbindung(en) enthält, wobei mindestens eine dieser Verbindungen mindestens drei Carboxylgruppen pro Molekül aufweist.

6. Verfahren zur Herstellung von wäßrigen Epoxidharz-Dispersionen nach Anspruch 1, **dadurch gekennzeichnet, daß** das Dispergiermittel (B) zusätzlich ein Tensid enthält.

7. Verfahren zur Herstellung von wäßrigen Epoxidharz-Dispersionen, **dadurch gekennzeichnet, daß** das Dispergiermittel (B) zusätzlich ein nichtionisches Tensid enthält.

## Claims

1. A process for preparing aqueous epoxy resin dispersions, in the first step of which an epoxy resin (A) is prepared from
- from 50 to 95% by weight of one or more epoxide compounds (A-1) containing at least two epoxide groups per molecule and having an epoxide equivalent mass of from 100 to 2000 g/mol,
- from 5 to 50% by weight of an aromatic polyol (A-2),
at least a portion of an ethylenically unsaturated monomer according to (C) capable of free-radical polymerization or copolymerization being added to the said resin, followed by the homogenous incorporation of a dispersant (B) comprising a condensation product (B-1) of a polyol having a weight average molar mass M_{w} of from 200 to 20,000 g/mol and an epoxide compound containing on average at least two epoxide groups per molecule and having an epoxide equivalent mass of from 100 to 10,000 g/mol, and finally water, in portions, is metered into this mixture,
and subsequently, following addition of an initiator and of any remainder of the monomers according to (C), a free-radical polymerization of these monomers (C) is performed.

2. The process for preparing aqueous epoxy resin dispersions as claimed in claim 1, wherein the preparation of the epoxy resin (A) is additionally carried out using compounds (A-3) in a fraction of up to 25% by weight, selected from polyamines, polyalkylene oxides having terminal amino groups, polycarboxylic acids and aliphatic polyols.

3. The process for preparing aqueous one-component epoxy resin dispersions as claimed in claim 1, wherein following the polymerization a curing agent (D) is added.

4. The process for preparing aqueous one-component epoxy resins dispersions as claimed in claim 3, wherein the curing agent (D) is selected from the group consisting of amines, amides, Lewis acids, phenols, carboxylic acids, carboxylic anhydrides and amino resins.

5. The process as claimed in claim 3, wherein the curing agent (D) comprises one or more carboxyl-containing compounds, at least one of these compounds containing at least three carboxyl groups per molecule.

6. The process for preparing aqueous epoxy resin dispersions as claimed in claim 1, wherein the dispersant (B) further comprises a surfactant.

7. A process for preparing aqueous epoxy resin dispersions, wherein the dispersant (B) further comprises a nonionic surfactant.

## Revendications

1. Procédé pour la préparation de dispersions aqueuses de résines époxyde, dans lequel, dans la première étape, on prépare une résine époxyde (A) constituée
- de 50 à 95 % en poids d'un ou plusieurs composés époxyde (A-1) ayant au moins deux groupes époxyde par molécule et une masse équivalente d'époxyde de 100 à 2000 g/mol,
- de 5 à 50 % en poids d'un polyol aromatique (A-2),
auquel on ajoute une quantité au moins partielle d'un monomère éthyléniquement insaturé selon (C) capable de polymérisation ou de copolymérisation radicalaire, ensuite on homogénéise en mélangeant un agent dispersant (B), qui contient un produit de condensation (B-1) d'un polyol ayant une masse molaire moyenne en masse M_{w} comprise entre 200 et 20 000 g/mol et un composé époxyde ayant en moyenne au moins deux groupes époxyde par molécule et une masse équivalente d'époxyde comprise entre 100 et 10 000 g/mol,
et on ajoute enfin dans ce mélange de l'eau par portions,
ensuite on réalise, après addition d'un initiateur et éventuellement du reste des monomères selon (C), une polymérisation radicalaire de ces monomères (C).

2. Procédé pour la préparation de dispersions aqueuses de résines époxyde selon la revendication 1, **caractérisé en ce que**, pour la préparation de la résine époxyde (A), on utilise des composés additionnels (A-3) en une proportion de jusqu'à 25 % en poids choisis parmi les polyamines, les polyoxydes d'alkylène ayant des groupes amino terminaux, les acides polycarboxyliques et les polyols aliphatiques.

3. Procédé pour la préparation de dispersions aqueuses de résines époxyde à un composant selon la revendication 1, **caractérisé en ce qu'**on ajoute, après la polymérisation, un durcisseur (D).

4. Procédé pour la préparation de dispersions de résines époxyde à un composant aqueuses selon la revendication 3, **caractérisé en ce que** le durcisseur (D) est choisi parmi les amines, amides, acides de Lewis, phénols, acides carboxyliques, anhydrides carboxyliques et aminoplastes.

5. Procédé selon la revendication 3, **caractérisé en ce que** le durcisseur (D) contient un ou plusieurs composés contenant des groupes carboxyle, dans lequel au moins un de ces composés présente au moins deux groupes carboxyle par molécule.

6. Procédé pour la préparation de dispersions de résines époxyde aqueuses selon la revendication 1, **caractérisé en ce que** l'agent dispersant (B) contient de plus un agent tensioactif.

7. Procédé pour la préparation de dispersions aqueuses de résines époxyde, **caractérisé en ce que** l'agent dispersant (B) contient en plus un agent tensioactif non ionique.
